# EUROPÄISCHE PATENTSCHRIFT

(11) **EP 0 828 106 B1**
(45) Veröffentlichungstag und Bekanntmachung des Hinweises auf die Patenterteilung: **06.02.2002**
(21) Anmeldenummer: 97103536.5
(22) Anmeldetag: 04.03.1997
(51) Int. Cl.: F16L 33/02

(54) **Federbandschelle**
Spring hose clamp
Collier de serrage à ressort

(30) Priorität: 09.09.1996 DE 19636495; 15.10.1996 DE 19642454; 18.11.1996 EP 96118438
(43) Veröffentlichungstag der Anmeldung: 11.03.1998
(73) Patentinhaber: Rasmussen GmbH, D-63477 Maintal (DE)
(72) Erfinder: Gyöngyösi, Jürgen, D-63454 Hanau (DE); Beicht, Bernd, D-64823 Gross-Umstadt (DE); Ruppert, Werner, D-63654 Büdingen (DE); Spors, Ralf, D-63486 Bruchköbel (DE)
(74) Vertreter: Knoblauch, Andreas, Dr.-Ing.

(56) Entgegenhaltungen:
- EP-A- 0 713 993
- EP-A- 0 828 105
- DE-A- 4 441 439
- DE-U- 7 246 897
- GB-A- 2 266 120
- US-A- 4 425 681
- US-A- 4 996 749
- US-A- 5 185 907
- US-A- 5 203 809
- US-A- 5 234 233
- US-A- 5 864 926

## Beschreibung

Die Erfindung bezieht sich auf eine Federbandschelle aus einem ringförmig gebogenen Federband mit einem ersten und einem zweiten Endabschnitt, die jeweils eine über den Umfang der Federbandschelle vorstehende Spannbacke zum Öffnen der Federbandschelle aufweisen, wobei der erste Endabschnitt durch einen Umfangsschlitz des zweiten Endabschnitts ragt, das Federband eine in Umfangsrichtung gerichtete Schließfederkraftkomponente auszuüben vermag, die im geöffneten Zustand der Federbandschelle größer als im Betriebszustand ist, der erste Endabschnitt im geöffneten Zustand der Federbandschelle unter jener Schließfederkraftkomponente mit einem Widerlager einer aus einem U-förmigen Einschnitt des Federbandes herausgedrückten Lasche an einer Widerlagerfläche am freien Ende der Spannbacke des zweiten Endabschnitts anliegt, die Widerlagerfläche einen Winkel mit einem Radius der Schelle einschließt und das Widerlager und die Widerlagerfläche durch eine radiale Relativbewegung der Endabschnitte außer Anlage bringbar sind.

Eine solche Federbandschelle wird als Schlauchklemme zum Festklemmen eines Schlauches, z.B. eines Kühlwasser- oder Benzinschlauches im Automobilbau, auf einem Rohr oder Rohrstutzen mit Halterippe verwendet und ist beispielsweise in der DE 44 41 439 A1 dargestellt. Um die Montage des Schlauches zu vereinfachen, wird die Federbandschelle beim Schlauch- oder Schellenhersteller zuvor im geöffneten Zustand auf dem Schlauch befestigt. Der vorgeöffnete Zustand wird dadurch erreicht, daß die Federbandschelle mittels einer an den Spannbacken angreifenden Spannzange so weit aufgeweitet wird, bis das Widerlager hinter der Widerlagerfläche einrastet, so daß sich die Federbandschelle nicht mehr zusammenziehen kann. Bei der Montage wird dann der Schlauch zusammen mit der im vorgeöffneten Zustand gehaltenen Schelle auf das Rohr geschoben. Dann werden die Spannbacken radial auseinandergedrückt, bis das Widerlager und die Widerlagerfläche außer Anlage gekommen sind. Die Federbandschelle zieht sich dann unter ihrer Federkraft fest um den Schlauch zusammen, wobei sie den Schlauch auf dem Rohr festklemmt. Die Stirnfläche der radial äußeren Spannbacke am freien Ende des zweiten Endabschnitts des Federbandes verläuft unter rechtem Winkel zur Außen- und Innenseite bzw. -ebene dieser Spannbacke. Die Stirnfläche am freien Ende der Lasche ist dagegen abgeschrägt. Diese Abschrägung ist schwierig herstellbar. Ferner erstreckt sich die Spannbacke des zweiten Endabschnitts unter einem spitzen Winkel zur Tangentialrichtung radial nach außen. Diese Spannbacke und die Lasche stehen daher verhältnismäßig weit radial nach außen in hinderlicher Weise vor. Darüber hinaus besteht die Gefahr, daß die Federbandschelle beim Transport oder der Handhabung, zum Beispiel durch einen Stoß auf die Spannbacke des zweiten Endabschnitts oder wenn die Schelle versehentlich auf diese Spannbacke fällt, aus dem geöffneten Zustand entriegelt wird und sich unter ihrer Federkraft schlagartig zusammenzieht, wobei sie geschoßartig davonfliegen und Personen verletzen oder Gegenstände beschädigen oder verlorengehen kann.

Der Erfindung liegt die Aufgabe zugrunde, eine Federbandschelle der eingangs genannten Art anzugeben, die mit geringerem Aufwand herstellbar ist und bei der die Gefahr geringer ist, daß sie sich aus dem vorgeöffneten Zustand unabsichtlich schließt.

Erfindungsgemäß ist diese Aufgabe dadurch gelöst, daß das Widerlager durch eine radial innere Kante der freien Stirnfläche der Lasche gebildet ist und der den Winkel begrenzende Radius eine radial innere Kante der Widerlagerfläche tangiert.

Diese Lösung hat den Vorteil, daß das Widerlager und die Widerlagerfläche aufgrund einer unbeabsichtigten Kraft, die radial von außen im vorgeöffneten Zustand der Federbandschelle auf einen der Endabschnitte einwirkt, nicht ungewollt außer Anlage kommen, sondern das Widerlager unter der Spannkraft der Federbandschelle bestrebt ist, radial nach außen, entgegengesetzt zur Öffnungsrichtung, zu wandern. Auf diese Weise ist ein festerer Zusammenhalt der Spannbacken im vorgeöffneten Zustand der Federbandschelle sichergestellt. Die Lasche läßt sich ferner sehr leicht herstellen, da sie nach Ausbildung des U-förmigen Einschnitts im ersten Endabschnitt lediglich schräg radial nach außen gebogen zu werden braucht, ohne ihre Stirnfläche bearbeiten zu müssen.

Vorzugsweise ist. dafür gesorgt, daß die Widerlagerfläche durch den Boden einer Nut im freien Ende der Spannbacke des zweiten Endabschnitts gebildet ist. Die Nut sorgt hierbei für eine Führung und axiale Lagesicherung der Lasche im vorgeöffneten Zustand der Federbandschelle.

Sodann kann die Spannbacke des zweiten Endabschnitts radial außen am ersten Endabschnitt anliegen. Diese Spannbacke und die Lasche stehen dann im vorgeöffneten Zustand der Federbandschelle zum einen nicht weit radial nach außen vor. Zum anderen kann diese Spannbacke nicht ungewollt durch eine radial nach innen auf sie ausgeübte Kraft radial nach innen gedrückt werden, so daß die Widerlagerfläche und das Widerlager außer Anlage kämen und die Federbandschelle sich selbsttätig schließt, d.h. zusammenzieht.

Eine vorteilhafte Weiterbildung besteht ferner darin, daß die Widerlagerfläche durch die Stirnfläche einer radial nach außen aus dem freien Ende der Spannbacke des zweiten Endabschnitts zwischen in Umfangsrichtung von diesem freien Ende bis zu einem den Umfangsschlitz begrenzenden Quersteg geführten Einschnitten herausgebogenen Zunge gebildet ist und die Widerlagerfläche senkrecht zur Richtung des freien Endes der Zunge steht. Diese Zunge ermöglicht es, die Widerlagerfläche ohne spanabhebende Bearbeitung, lediglich durch eine Stanzung auszubilden.

Günstig ist es, wenn die Spannbacken sich etwa tangential zum Federband erstrecken, um zu vermeiden, daß sie radial zu weit vorstehen.

Vorzugsweise ist die Spannbacke des zweiten Endabschnitts radial nach außen gewölbt. Diese Wölbung gestattet es, mittels eines einfachen Werkzeugs, beispielsweise eines herkömmlichen Schraubendrehers, die Spannbacke des zweiten Endabschnitts relativ zum ersten Endabschnitt des Federbands radial nach außen zu drükken, um die Federbandschelle aus dem vorgeöffneten Zustand zu entriegeln, so daß sie sich unter ihrer Federvorspannung fest um den festzuklemmenden Schlauch herumlegt. Hierfür braucht beispielsweise die Klinge des Schraubendrehers lediglich in den Freiraum zwischen der Wölbung der Spannbacke des zweiten Endabschnitts und dem ersten Endabschnitt eingeführt und radial nach außen bewegt oder gedreht zu werden.

Bei einer bevorzugten weiteren Alternative ist dafür gesorgt, daß die Spannbacke des zweiten Endabschnitts etwa in Form einer Halbwelle gebogen und die Widerlagerfläche durch die Außenseite des Endabschnitts der Halbwelle gebildet ist. Bei dieser Konstruktion benötigt die Widerlagerfläche keine zusätzliche mechanische Bearbeitung. Allein durch den Biegevorgang läßt sich die gewünschte Neigung der Widerlagerfläche zur Radialrichtung erzielen. Auch wenn das Federband nur eine geringe Dicke hat, beispielsweise 0,8 mm oder weniger, ergibt sich eine sichere Verrastung im vorgeöffneten Zustand. Die Spannbackenfunktion wird durch die Halbwellenform nicht beeinträchtigt, da die Außenseite, an der nicht nur das Widerlager, sondern auch ein Spannwerkzeug zum Öffnen der Federbandschelle angreift, einen vergleichsweise kleinen Winkel zur Radialrichtung hat.

Günstig ist es ferner, wenn die Halbwelle die Spannbacke des ersten Endabschnitts in Radialrichtung überragt, der Umfangsschlitz bis nahe an die Kuppe der Halbwelle reicht und die Innenseite des Endabschnitts der Halbwelle zum Zweck des Überdehnungsschutzes einen Anschlag für die Spannbacke des ersten Endabschnitts bildet. Der Anschlag liegt gut geschützt und in unmittelbarer Nähe der Widerlagerfläche. Zwischen der Spannbacke des ersten Endabschnitts und dem Ende des Umfangsschlitzes ergibt sich ein. ausreichender Spalt für das Einführen eines Werkzeugs, z.B. eines Schraubendrehers, um die Federbandschelle zu schließen.

Ferner kann der radial nach innen ragende freie Endabschnitt der Halbwelle in einem im geöffneten Zustand der Federbandschelle radial außerhalb der Lasche liegenden Bereich ein Loch für den Eingriff eines Spannwerkzeugs aufweisen. Hierbei kann ein herkömmliches Spannwerkzeug verwendet werden, wie es schon für Federbandschellen gemäß DE 39 00 190 A1 verwendet wird.

Die Erfindung und ihre Weiterbildungen werden nachstehend anhand der beigefügten Zeichnungen von Ausführungsbeispielen näher beschrieben. Es zeigen:
- Fig. 1: eine perspektivische Ansicht eines ersten Ausführungsbeispiels einer erfindungsgemäßen Federbandschelle im vorgeöffneten Zustand,
- Fig. 2: eine perspektivische Ansicht des ersten Ausführungsbeispiels der erfindungsgemäßen Federbandschelle im geschlossen Zustand auf einem Schlauch,
- Fig. 3: einen Querschnitt des ersten Ausführungsbeispiels der erfindungsgemäßen Federbandschelle im vorgeöffneten Zustand,
- Fig. 4: einen Ausschnitt der Fig. 3 in vergrößertem Maßstab,
- Fig. 5: eine perspektivische Ansicht eines zweiten Ausführungsbeispiels einer erfindungsgemäßen Federbandschelle im vorgeöffneten Zustand,
- Fig. 6: einen Ausschnitt eines Querschnitts der Fig. 5,
- Fig. 7: eine perspektivische Ansicht eines dritten Ausführungsbeispiels einer erfindungsgemäßen Federbandschelle im vorgeöffneten Zustand,
- Fig. 8: einen Ausschnitt eines Querschnitts der Fig. 7,
- Fig. 9: eine perspektivische Ansicht eines vierten Ausführungsbeispiels einer erfindungsgemäßen Federbandschelle im vorgeöffneten Zustand,
- Fig. 10: einen Ausschnitt eines Querschnitts der Fig. 9,
- Fig.11: eine perspektivische Ansicht eines fünften Ausführungsbeispiels einer erfindungsgemäßen Federbandschelle im vorgeöffneten Zustand,
- Fig.12: einen Ausschnitt eines Querschnitts der Fig. 11,
- Fig. 13: eine perspektivische Ansicht eines sechsten Ausführungsbeispiels einer erfindungsgemäßen Federbandschelle im vorgeöffneten Zustand,
- Fig.14: einen Ausschnitt eines Querschnitts der Fig. 13,
- Fig.15: eine perspektivische Ansicht eines siebten Ausführungsbeispiels einer erfindungsgemäßen Federbandschelle im vorgeöffneten Zustand,
- Fig.16: eine perspektivische Ansicht der Schelle nach Fig. 15 im geschlossenen Zustand auf einem Schlauch,
- Fig.17: einen Querschnitt durch die Schelle nach Fig. 15,
- Fig.18: die Schelle nach Fig. 16 bei angesetztem Spannwerkzeug und
- Fig.19: die Schelle nach Fig. 17 mit angesetztem Spannwerkzeug.

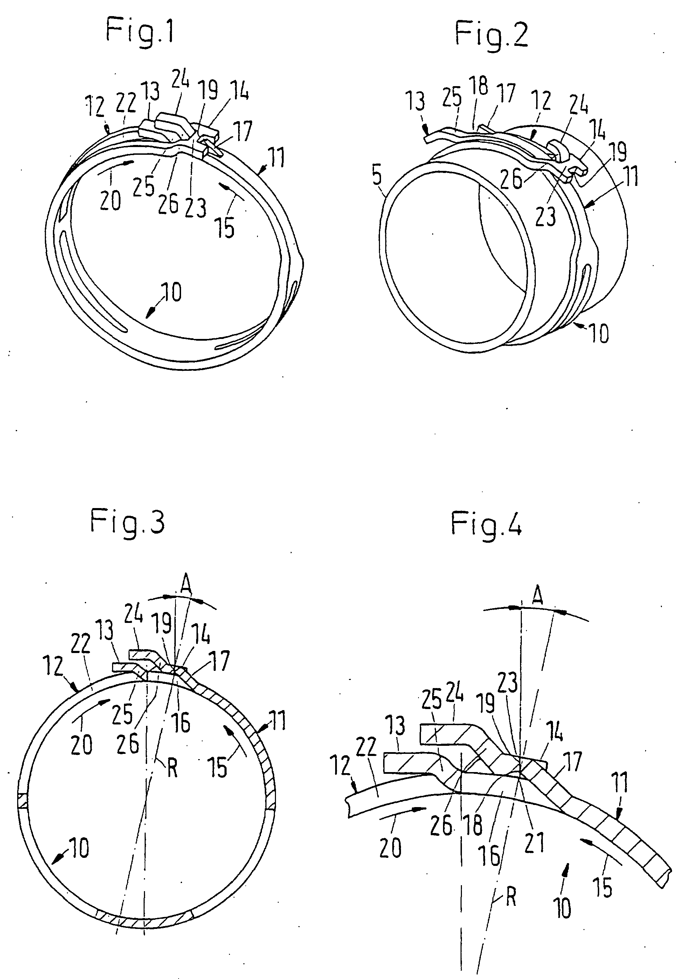

Die in den Fig. 1 bis 4 dargestellte Schelle besteht aus Federstahl und dient als Schlauchklemme zum Festklemmen eines Schlauches 5 auf einem Rohr oder Rohrstutzen, vorzugsweise von Kühlwasser- oder Benzinschläuchen in Kraftfahrzeugen.

Die Federbandschelle besteht aus einem ringförmig gebogenen Federband 10 mit einem ersten Endabschnitt 11 und einem zweiten Endabschnitt 12. Der erste Endabschnitt 11 hat an seinem Ende eine radial nach außen und in Umfangsrichtung gebogene Spannbacke 13 und der zweite Endabschnitt 12 eine ebenfalls radial nach außen und in Umfangsrichtung gebogene Spannbacke 14. Die Spannbacken 13 und 14 erstrecken sich etwa tangential zum Federband und dienen zum Öffnen der Federbandschelle aus einer entspannten oder weitgehend entspannten Lage gemäß Fig. 2, in der der Durchmesser der Federbandschelle kleiner als in dem in Fig. 1, 3 und 4 dargestellten vorgeöffneten Zustand ist.

Der erste Endabschnitt 11 hat in seiner durch einen Pfeil 15 angeordneten Schließrichtung hinter der Spannbacke 13 eine aus einem U-förmigen Einschnitt 16 herausgedrückte Lasche 17, die sich in Schließrichtung 15 des Endabschnitts 11 und schräg radial nach außen unter einem spitzen Winkel zur Tangentialrichtung der Federbandschelle erstreckt. Das freie Ende der Lasche 17 hat eine senkrecht zur Lasche 17 stehende Stirnfläche, deren radial innere Kante ein Widerlager 18 (Fig. 4) bildet, das an einer durch den Boden einer Nut im freien Ende der Spannbacke 14 gebildeten Widerlagerfläche 19 unter der in Umfangsrichtung 15 gerichteten Schließfederkraftkomponente des Federbandes 10 anliegt. Die gleiche Schließfederkraftkomponente übt der zweite Endabschnitt 12 in der entgegengesetzten Umfangsrichtung, angedeutet durch einen Pfeil 20, aus.

Die Widerlagerfläche 19 schließt einen spitzen Winkel A mit einem die radial innere Kante 21 (Fig. 4) der Widerlagerfläche 19 tangierenden Radius R der Schelle ein. Die Spannbacke 14 des Endabschnitts 12 liegt im geöffneten Zustand nach den Fig. 1, 3 und 4 radial außen am Endabschnitt 11 an.

Der erste Endabschnitt 11 ist etwas schmaler als der zweite Endabschnitt 12 und durch einen Umfangsschlitz 22 des zweiten Endabschnitts 12 von innen nach außen hindurchgeführt.

An einem Quersteg 23 der Spannbacke 14 ist ein sich zunächst schräg radial nach außen und dann tangential erstreckender Vorsprung 24 angeformt.

Wenn die Federbandschelle ihren (nicht dargestellten) vollständig oder gemäß Fig. 2 teilweise entspannten Zustand einnimmt, liegt auch die Lasche 17 im Bereich des Umfangsschlitzes 12. Um die Federbandschelle gegen die Federkraft des Federbandes 10 aus der vollständig entspannten (nicht dargestellten) Lage, in der sie den Schlauch 5 noch nicht umgibt, in die dargestellte vorgeöffnete Lage nach den Fig. 1, 3 und 4 zu bringen, werden die Spannbacken 13 und 14 mittels einer an ihren freien Enden angesetzten Spannzange in Umfangsrichtung entgegen der Richtung der Pfeile 15 und 20 zusammengedrückt, bis der den Umfangsschlitz 22 des zweiten Endabschnitts 12 abschließende Quersteg 23 über die Lasche 17 hinweggeglitten ist. Beim Abnehmen der Spannzange zieht sich die Federbandschelle dann wieder soweit zusammen, bis das Widerlager 18 und die Widerlagerfläche 19 aneinander anliegen. In diesem vorgeöffneten Zustand wird die Federbandschelle dann auf den Schlauch 5 geschoben. Um dann den auf ein Rohr geschobenen Schlauch 5 auf dem Rohr festzuklemmen, wird die den Schlauch 5 in ihrem vorgeöffneten Zustand umgebende Federbandschelle in den geschlossenen Zustand nach Fig. 2 gebracht. Hierfür braucht lediglich ein herkömmlicher, manuell zu betätigender Schraubendreher mit seiner Klinge zwischen der Spannbacke 13 und dem Vorsprung 24 eingesetzt und gedreht zu werden. Dabei wird der Quersteg 23 bis über die Lasche 17 radial nach außen gedrückt, so daß das Widerlager 18 und die Widerlagerfläche 19 außer Anlage kommen und sich die Federbandschelle fest um den Schlauch zusammenzieht.

Die Anlage der Lasche 17 mit ihrer vorderen Kante 18 an der gegenüber dem Radius R unter dem spitzen Winkel A geneigten Widerlagerfläche 19 und die Anlage der Spannbacke 14 radial nach außen am Endabschnitt 11 im vorgeöffneten Zustand der Federbandschelle haben den Vorteil, daß das Widerlager 18 und die Widerlagerfläche 19 beim Transport oder einer Handhabung der Federbandschelle im vorgeöffneten Zustand aufgrund einer unbeabsichtigten Kraft, die radial von außen auf-den Vorsprung 24 oder die Spannbacke oder die Lasche 17 ausgeübt wird, nicht ungewollt außer Anlage kommen, so daß sich die Schelle schlagartig zusammenziehen würde. Gegebenenfalls könnte die Schelle durch die freigesetzte sehr hohe Spannkraft wie ein Geschoß davonfliegen und Personen verletzen oder Gegenstände beschädigen. Die schräge Widerlagerfläche 19 sorgt vielmehr dafür, daß die Widerlagerfläche 18 unter der Spannkraft der Schelle bestrebt ist, radial nach außen, entgegengesetzt zur Öffnungsrichtung zu wandern. Auf diese Weise ist ein festerer Zusammenhalt der Spannbacken 13 und 14 im vorgeöffneten Zustand der Schelle sichergestellt.

Die Lasche 17 läßt sich ferner sehr leicht herstellen, da sie nach Ausbildung des Einschnitts 16 im Endabschnitt lediglich schräg radial nach außen gebogen zu werden braucht, ohne ihre Stirnfläche bearbeiten zu müssen.

Die Nut in der Stirnfläche der Spannbacke 14 sorgt ferner für eine Führung und axiale Lagesicherung der Lasche 17 im vorgeöffneten Zustand der Federbandschelle.

Wenn die Spannbacken 13, 14 in Umfangsrichtung der Pfeile 15, 20 etwas weiter als bis in die in den Fig. 1, 3 und 4 dargestellte vorgeöffnete Lage zusammengedrückt werden, legen sich die in der vorgeöffneten Lage nahe beieinanderliegenden schrägen Abschnitte 25 und 26 der Spannbacke 13 und des Vorsprungs 24 aneinander an, so daß die Federbandschelle nicht über ein zulässiges Maß hinaus geöffnet werden kann.

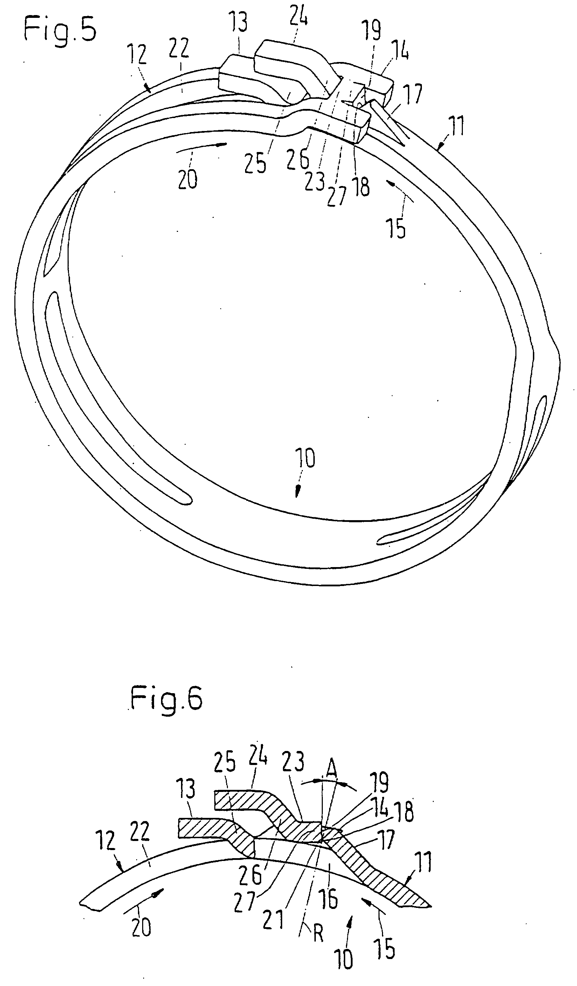

Das Ausführungsbeispiel nach den Fig. 5 und 6 unterscheidet sich von dem ersten Ausführungsbeispiel nach den Fig. 1 bis 4 lediglich dadurch, daß die Widerlagerfläche 19 durch die Stirnfläche einer radial nach außen aus dem freien Ende der Spannbacke 14 zwischen in Umfangsrichtung von diesem freien Ende bis zu dem Quersteg 23 geführten Einschnitten herausgebogenen Zunge 27 gebildet ist und die Widerlagerfläche 19 senkrecht zur Richtung des freien Endes der Zunge 27 steht. Hierbei kommt man ohne spanabhebende Bearbeitung der Widerlagerfläche 19 aus, und dennoch läßt sich der Winkel A wenigstens ebenso groß wie im ersten Ausführungsbeispiel wählen.

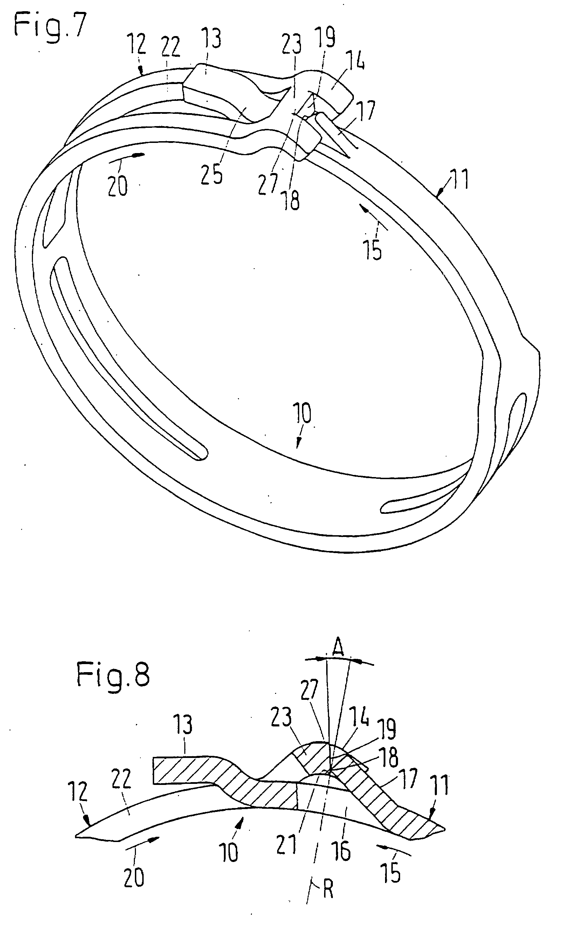

Das dritte Ausführungsbeispiel nach den Fig. 7 und 8 unterscheidet sich von dem zweiten Ausführungsbeispiel nach den Fig. 5 und 6 im wesentlichen nur dadurch, daß die Spannbacke 14 radial nach außen gewölbt ist, wie es in den Fig. 7 und 8 dargestellt ist, und der Vorsprung 24 entfallen ist. Um hierbei die Federbandschelle aus dem vorgeöffneten Zustand nach den Fig. 7 und 8 in den geschlossenen Zustand nach Fig. 2 zu bringen, braucht ebenfalls nur ein herkömmlicher, manuell zu betätigender Schraubendreher mit seiner Klinge in den Freiraum zwischen dem Quersteg 23 der Spannbacke 14 und dem ersten Endabschnitt 11 eingesetzt und gedreht zu werden. Dabei wird wiederum der Quersteg 23 bis über die Lasche 17 radial nach außen gedrückt, so daß das Widerlager 18 und die Widerlagerfläche 19 außer Anlage kommen und sich die Federbandschelle fest um den Schlauch zusammenzieht. Der bei dem ersten Ausführungsbeispiel vorgesehene Vorsprung 24 ist mithin hierfür nicht erforderlich. Dies hat den weiteren Vorteil, daß der Umriß der Federbandschelle sowohl im vorgeöffneten Zustand als auch im geschlossenen Zustand jeweils kleiner ist und die Gefahr einer unbeabsichtigten Verhakung des Vorsprungs 24 mit anderen Gegenständen bei einem Transport oder der Handhabung entfällt und damit auch die Gefahr vermieden wird, daß sich die vorgeöffnete Federbandschelle unbeabsichtigt schließt.

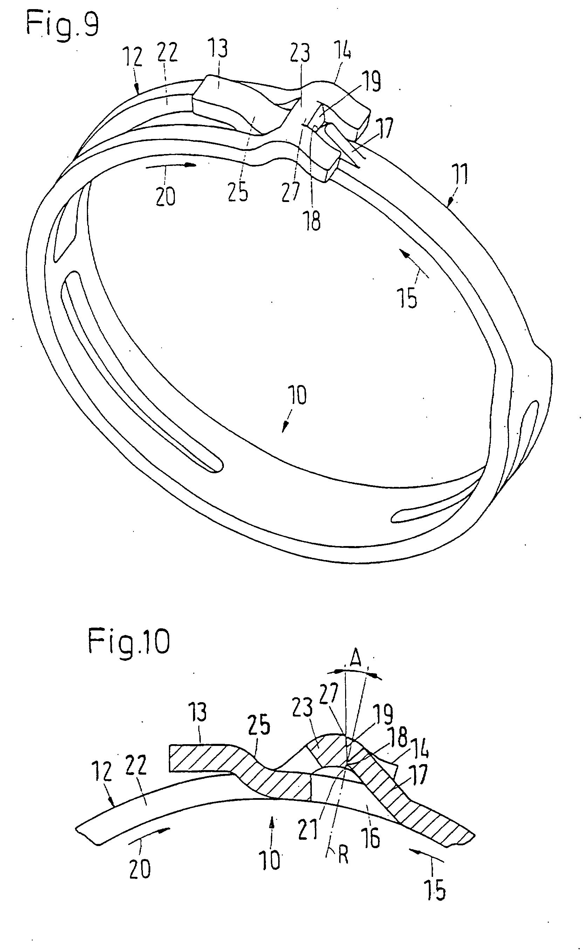

Das Ausführungsbeispiel nach den Fig. 9 und 10 unterscheidet sich von dem nach den Fig. 7 und 8 lediglich dadurch, daß die Nut im freien Ende der Spannbacke 14 etwas länger ausgebildet ist, so daß die Schenkel beiderseits der Nut etwas radial nach außen umgebogen werden können, wie es in den Fig. 9 und 10 dargestellt ist. Die Spannbacke 14 bietet daher größere Angriffsflächen für ein Spannwerkzeug in Form einer Zange an den freien Enden der Schenkel der in der Spannbacke 14 ausgebildeten Nut.

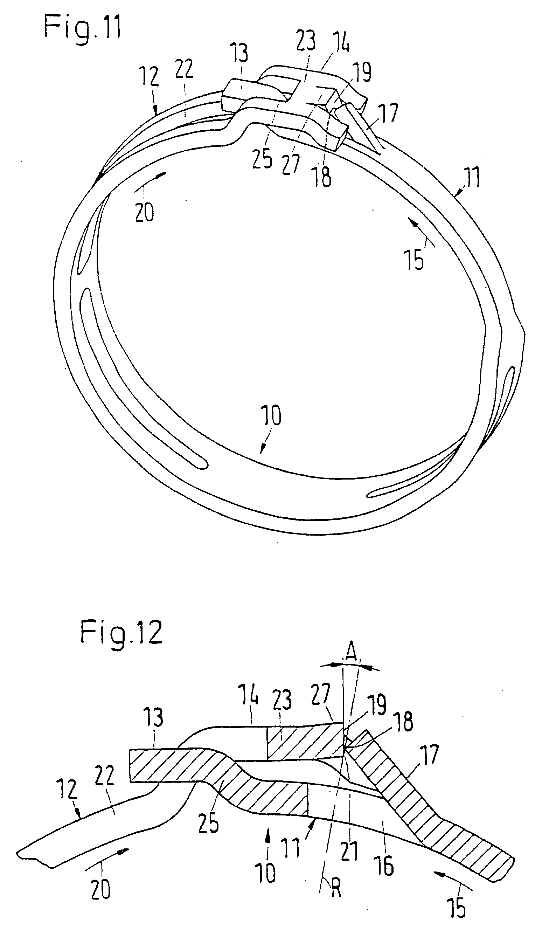

Das Ausführungsbeispiel nach den Fig. 11 und 12 unterscheidet sich von dem nach den Fig. 9 und 10 lediglich dadurch, daß die Wölbung der Spannbacke 14 nicht rund, sondern etwa trapezförmig ausgebildet ist. Gemäß Fig. 12 ergibt sich dadurch ein größerer Freiraum zwischen der Spannbacke 14 und dem ersten Endabschnitt 11 des Federbands 10 zur Einführung eines Entsicherungswerkzeugs.

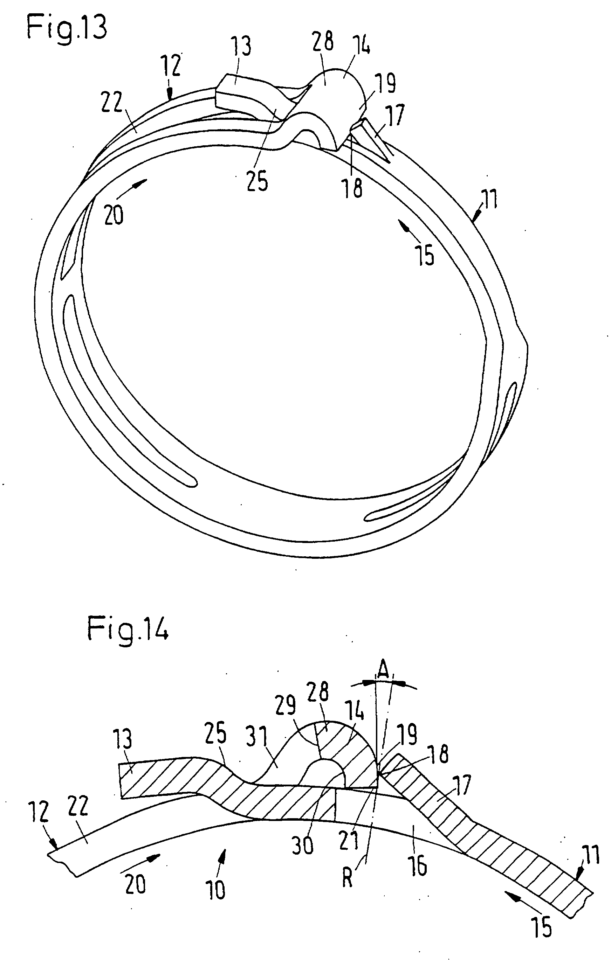

Das Ausführungsbeispiel nach den Fig. 13 und 14 unterscheidet sich von den vorangehenden Ausführungsbeispielen dadurch, daß das freie Ende der Spannbacke 14 des zweiten Endabschnitts 12 etwa in Form einer radial nach außen vorstehenden Halbwelle 28 gebogen und die Widerlagerfläche 19 durch die Außenseite des freien Endabschnitts der Halbwelle 28 gebildet ist. Durch einen einfachen Biegevorgang erhält man ohne mechanische Nachbearbeitung eine Widerlagerfläche 19, an der sich die das Widerlager 18 bildende Kante der Lasche 17 abstützen kann. Der Winkel A, den die Widerlagerfläche 19 mit dem Radius R bildet, kann den gleichen Wert annehmen wie bei den vorangegangenen Ausführungsbeispielen. Die Halbwelle 28 überragt die Spannbacke 13 des ersten Endabschnitts 11 in Radialrichtung, und der Umfangsschlitz 22 reicht bis nahe an die Kuppe der Halbwelle 28, mit der Folge, daß auch das Schlitzende 29 radial außerhalb der Spannbacke 13 liegt. Wenn daher die beiden Spannbacken 13 und 14 mittels eines Werkzeugs gegeneinander gedrückt werden, bildet die Innenseite 30 des Endabschnitts der Halbwelle 28, in vorliegendem Ausführungsbeispiel die radial nach innen gerichtete Kante, einen Anschlag, an dem der schräge Abschnitt 25 der Spannbacke 13 zur Anlage kommt, so daß ein Überdehnungsschutz gegeben ist. Damit die Federbandschelle aus dem vorgeöffneten Zustand in den Klemmzustand übergeht, wird ein entsprechendes Werkzeug, beispielsweise ein Schraubendreher, in den Schlitzabschnitt 31 zwischen Schlitzende 29 und Spannbacke 13 geschoben und anschließend gedreht, so daß sich das Widerlager 18 radial bis unter die Kante 21 verschiebt und die in Umfangsrichtung gerichtete Schließfederkraft wirksam werden kann.

Die Halbwelle 28 bewirkt, daß bei der zweiten Spannbacke 14 keine scharfen Kanten nach außen weisen. Außerdem erhebt sich die Halbwelle 28 über die Lasche 17 und die Spannbacke 13 und bewirkt dadurch in der voröffnungsstellung einen gewissen Berührungsschutz. Am günstigsten ist hierbei die gerundete Form der Halbwelle 28, wie sie in der Zeichnung veranschaulicht ist. Der Querschnitt kann aber auch eckig, z.B. trapezförmig, sein. Wesentlich ist, daß die Außenseite des Endabschnitts der Halbwelle 28 als Widerlagerfläche 19 benutzbar ist, die in einem Winkel A zum Radius R verläuft.

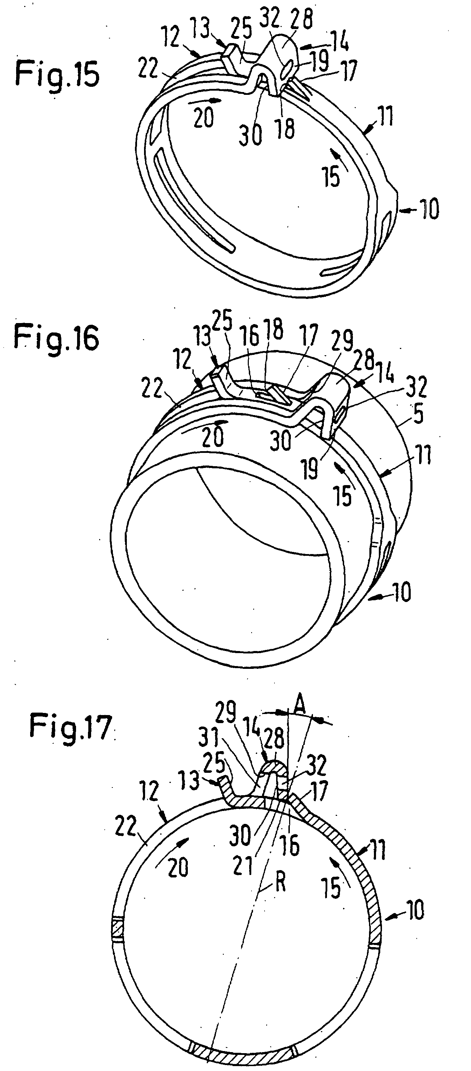

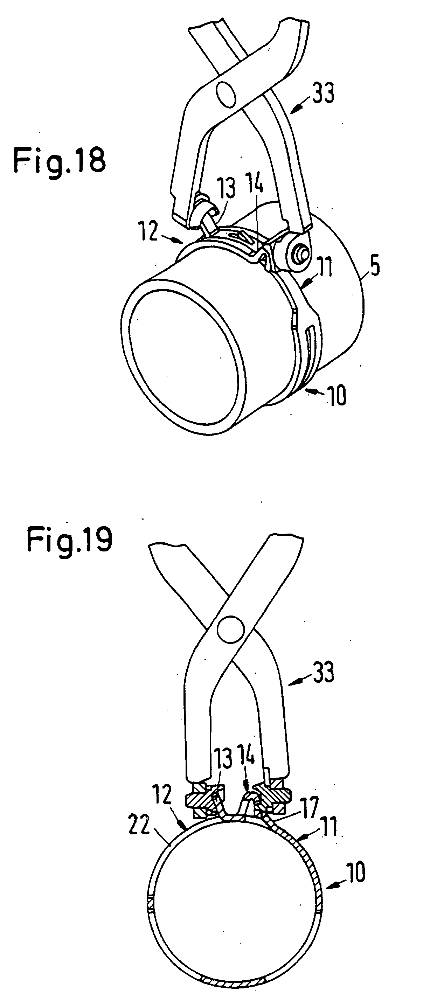

Das Ausführungsbeispiel nach den Fig. 15 bis 19 unterscheidet sich von dem nach den Fig. 13 und 14 im wesentlichen nur dadurch, daß sich die Spannbacke 13 in herkömmlicher Weise etwa radial nach außen erstreckt und die Spannbacke 14 eine etwas weiter radial nach außen vorstehende Halbwelle 28 bildet und zum anderen der radial nach innen ragende freie Endabschnitt der Halbwelle 28 in einem im geöffneten Zustand der Federbandschelle radial außerhalb der Lasche 17 liegenden Bereich ein Loch 32 für den Eingriff eines Spannwerkzeugs 33 aufweist. Hierbei kann ein herkömmliches Spannwerkzeug 33 verwendet werden, wie es schon für die Federbandschelle gemäß DE 39 00 190 A1 verwendet wird und in den Fig. 18 und 19 in Eingriff mit den Spannbacken 13 und 14 dargestellt ist.

## Patentansprüche

1. Federbandschelle aus einem ringförmig gebogenen Federband (10) mit einem ersten und einem zweiten Endabschnitt (11, 12), die jeweils eine über den Umfang der Federbandschelle vorstehende Spannbacke (13, 14) zum Öffnen der Federbandschelle aufweisen, wobei der erste Endabschnitt (11) durch einen Umfangsschlitz (22) des zweiten Endabschnitts (12) ragt, das Federband (10) eine in Umfangsrichtung gerichtete Schließfederkraftkomponente auszuüben vermag, die im geöffneten Zustand der Federbandschelle größer als im Betriebszustand ist, der erste Endabschnitt (11) im geöffneten Zustand der Federbandschelle unter jener Schließfederkraftkomponente mit einem Widerlager (18) einer aus einem U-förmigen Einschnitt (16) des Federbandes (10) herausgedrückten Lasche (17) an einer Widerlagerfläche (19) am freien Ende der Spannbacke (14) des zweiten Endabschnitts (12) anliegt, die Widerlagerfläche (19) einen Winkel (A) mit einem Radius (R) der Schelle einschließt und das Widerlager (18) und die Widerlagerfläche (19) durch eine radiale Relativbewegung der Endabschnitte (11, 12) außer Anlage bringbar sind, **dadurch gekennzeichnet, daß** das Widerlager (18) durch eine radial innere Kante der freien Stirnfläche der Lasche (17) gebildet ist und der den Winkel (A) begrenzende Radius (R) nur eine radial innere Kante (21) der Widerlagerfläche (19) tangiert.

2. Federbandschelle nach Anspruch 1, **dadurch gekennzeichnet, daß** die Widerlagerfläche (19) durch den Boden einer Nut im freien Ende der Spannbacke (14) des zweiten Endabschnitts (12) gebildet ist.

3. Federbandschelle nach Anspruch 1 oder 2, **dadurch gekennzeichnet, daß** die Spannbacke (14) des zweiten Endabschnitts (12) radial außen am ersten Endabschnitt (11) anliegt.

4. Federbandschelle nach einem der Ansprüche 1 bis 3, **dadurch gekennzeichnet, daß** die Widerlagerfläche (19) durch die Stirnfläche einer radial nach außen aus dem freien Ende der Spannbacke (14) des zweiten Endabschnitts (12) zwischen in Umfangsrichtung von diesem freien Ende bis zu einem den Umfangsschlitz (22) begrenzenden Quersteg (23) geführten Einschnitten herausgebogenen Zunge (27) gebildet ist und die Widerlagerfläche (19) senkrecht zur Richtung des freien Endes der Zunge (27) steht.

5. Federbandschelle nach einem der Ansprüche 1 bis 4, **dadurch gekennzeichnet, daß** die Spannbacken (13, 14) sich etwa tangential zum Federband (10) erstrecken.

6. Federbandschelle nach Anspruch 4, **dadurch gekennzeichnet, daß** die Spannbacke (14) des zweiten Endabschnitts (12) radial nach außen gewölbt ist.

7. Federbandschelle nach einem der Ansprüche 1 bis 3, **dadurch gekennzeichnet, daß** die Spannbacke (14) des zweiten Endabschnitts (12) etwa in Form eines Halbwelle (28) gebogen und die Widerlagerfläche (19) durch die Außenseite des Endabschnitts der Halbwelle (28) gebildet ist.

8. Federbandschelle nach Anspruch 7, **dadurch gekennzeichnet, daß** die Halbwelle (28) die Spannbacke (13) des ersten Endabschnitts (11) in Radialrichtung überragt, der Umfangsschlitz (22) bis nahe an die Kuppe der Halbwelle (28) reicht und die Innenseite (30) des Endabschnitts der Halbwelle (28) zum Zweck des Überdehnungsschutzes einen Anschlag für die Spannbacke (13) des ersten Endabschnitts (11) bildet.

9. Federbandschelle nach Anspruch 7 oder 8, **dadurch gekennzeichnet, daß** der radial nach innen ragende freie Endabschnitt der Halbwelle (28) in einem im geöffneten Zustand der Federbandschelle radial außerhalb der Lasche (17) liegenden Bereich ein Loch (32) für den Eingriff eines Spannwerks aufweist.

## Claims

1. A spring band clip comprising a spring band (10) which is bent in an annular shape and which comprises first and second end portions (11, 12) each having a respective clamping jaw (13, 14) which projects beyond the periphery of the spring band clip, for opening the spring band clip, wherein the first end portion (11) projects through a peripheral slot (22) in the second end portion (12), the spring band (10) can exert a closing spring force component which is directed in the peripheral direction and which is greater in the opened condition of the spring band clip than in the operative condition, the first end portion (11) in the opened condition of the spring band clip under that closing spring force component bears against an abutment surface (19) at the free end of the clamping jaw (14) of the second end portion (12), with an abutment (18) of a tongue (17) which is pressed out of a U-shaped incision (16) in the spring band (10), the abutment surface (19) includes an angle (A) with a radius (R) of the clip and the abutment (18) and the abutment surface (19) can be brought out of contact by a radial relative movement of the end portions (11, 12), **characterised in that** the abutment (18) is formed by a radially inner edge of the free end face of the tongue (17) and the radius (R) delimiting the angle (A) touches only a radially inner edge (21) of the abutment surface (19).

2. A spring band clip according to claim 1 **characterised in that** the abutment surface (19) is formed by the bottom of a groove in the free end of the clamping jaw (14) of the second end portion (12).

3. A spring band clip according to claim 1 or claim 2 **characterised in that** the clamping jaw (14) of the second end portion (12) bears radially outwardly against the first end portion (11).

4. A spring band clip according to one of claims 1 to 3 **characterised in that** the abutment surface (19) is formed by the end face of a tongue portion (27) which is bent radially outwardly from the free end of the clamping jaw (14) of the second end portion (12) between incisions which are provided in the peripheral direction from the free end of the second end portion to a transverse limb (23) delimiting the peripheral slot (22) and the abutment surface (19) is perpendicular to the direction of the free end of the tongue portion (27).

5. A spring band clip according to one of claims 1 to 4 **characterised in that** the clamping jaws (13, 14) extend substantially tangentially with respect to the spring band (10).

6. A spring band clip according to claim 4 **characterised in that** the clamping jaw (14) of the second end portion (12) is curved radially outwardly.

7. A spring band clip according to one of claims 1 to 3 **characterised in that** the clamping jaw (14) of the second end portion (12) is bent substantially in the form of a half-wave (28) and the abutment surface (19) is formed by the outward side of the end portion of the half-wave (28).

8. A spring band clip according to claim 7 **characterised in that** the half-wave (28) projects beyond the clamping jaw (13) of the first end portion (11) in the radial direction, the peripheral slot (22) extends to close to the top of the half-wave (28) and the inward side (29) of the end portion of the half-wave (28) forms an abutment means for the clamping jaw (13) of the first end portion (11) for the purposes of affording protection from over-stretching.

9. A spring band clip according to claim 7 or claim 8 **characterised in that** in a region which is radially outside the tongue (17) in the opened condition of the spring band clip the radially inwardly projecting free end portion of the half-wave (28) has a hole (32) for the engagement of a clamping tool.

## Revendications

1. Collier en ruban-ressort constitué en un ruban-ressort (10) cintré en forme annulaire, comportant un premier et un second tronçons d'extrémité (11, 12) qui présentent chacun une mâchoire de serrage (13, 14) dépassant au-delà de la périphérie du collier pour ouvrir le collier, dans lequel le premier tronçon d'extrémité (11) traverse une fente périphérique (22) du second tronçon d'extrémité (12), dans lequel le ruban-ressort (10) est capable d'exercer une composante de force élastique de fermeture dirigée en direction périphérique qui est plus grande dans l'état ouvert du collier que dans l'état de fonctionnement, dans lequel le premier tronçon d'extrémité (11) s'appuie, dans l'état ouvert du collier, avec ladite composante de force élastique de fermeture contre une surface de contrebutée (19) à l'extrémité libre de la mâchoire de serrage (14) du second tronçon d'extrémité (12), et ceci par une contrebutée (18) d'une patte (17) qui est estampée à partir d'une entaille (16) en forme de U du ruban-ressort (10), dans lequel la surface de contrebutée (19) enferme un angle (A) avec un rayon (R) du collier et la contrebutée (18) et la surface de contrebutée (19) peuvent être dégagées l'une de l'autre par un mouvement relatif radial des tronçons d'extrémité (11, 12), **caractérisé en ce que** la contrebutée (18) est formée par une arête radialement intérieure de la surface frontale libre de la patte (17), et le rayon (R) limitant l'angle (A) n'est tangent qu'à une arête (21) radialement intérieure de la surface de contrebutée (19).

2. Collier en ruban-ressort selon la revendication 1, **caractérisé en ce que** la surface de contrebutée (19) est formée par le fond d'une gorge dans l'extrémité libre de la mâchoire de serrage (14) du second tronçon d'extrémité (12).

3. Collier en ruban-ressort selon l'une ou l'autre des revendications 1 et 2, **caractérisé en ce que** la mâchoire de serrage (14) du second tronçon d'extrémité (12) s'appuie radialement à l'extérieur contre le premier tronçon d'extrémité (11).

4. Collier en ruban-ressort selon l'une quelconque des revendications 1 à 3, **caractérisé en ce que** la surface de contrebutée (19) est formée par la surface frontale d'une languette (27) cintrée radialement vers l'extérieur à partir de l'extrémité libre de la mâchoire de serrage (14) du second tronçon d'extrémité (12) entre des entailles menées en direction périphérique depuis cette extrémité libre jusqu'à une barrette transversale (23) délimitant la fente périphérique (22), et **en ce que** la surface de contrebutée (19) est située perpendiculairement à la direction de l'extrémité libre de la languette (27).

5. Collier en ruban-ressort selon l'une quelconque des revendications 1 à 4, **caractérisé en ce que** les mâchoires de serrage (13, 14) s'étendent approximativement tangentiellement au ruban-ressort (10).

6. Collier en ruban-ressort selon la revendication 4, **caractérisé en ce que** la mâchoire de serrage (14) du second tronçon d'extrémité (12) est bombée radialement vers l'extérieur.

7. Collier en ruban-ressort selon l'une quelconque des revendications 1 à 3, **caractérisé en ce que** la mâchoire de serrage (14) du second tronçon d'extrémité (12) est cintrée approximativement sous la forme d'une demi-onde (28) et la surface de contrebutée (19) est formée par la face extérieure du tronçon d'extrémité de la demi-onde (28).

8. Collier en ruban-ressort selon la revendication 7, **caractérisé en ce que** la demi-onde (28) dépasse la mâchoire de serrage (13) du premier tronçon d'extrémité (11) en direction radiale, **en ce que** la fente périphérique (22) s'étend jusqu'à proximité du sommet de la demi-onde (28), et **en ce que** le côté intérieur (30) du tronçon d'extrémité de la demi-onde (28) forme une butée pour la mâchoire de serrage (13) du premier tronçon d'extrémité (11) à titre de protection à l'encontre d'un allongement excessif.

9. Collier en ruban-ressort selon l'une ou l'autre des revendications 7 et 8, **caractérisé en ce que** le tronçon d'extrémité libre de la demi-onde (28), tronçon qui se projette radialement vers l'intérieur présente, dans une zone située radialement à l'extérieur de la patte (17), un trou (32) pour l'engagement d'un outil de serrage dans l'état ouvert du collier en ruban-ressort.
